(19) **Europäisches Patentamt / European Patent Office / Office européen des brevets**

(11) **EP 4 332 243 A1**

(12) **EUROPEAN PATENT APPLICATION**
published in accordance with Art. 153(4) EPC

(43) Date of publication:
06.03.2024 Bulletin 2024/10

(21) Application number: 22832514.8

(22) Date of filing: 25.03.2022

(51) International Patent Classification (IPC):
$C21B\ 5/00^{(2006.01)}$    $C21B\ 7/24^{(2006.01)}$

(52) Cooperative Patent Classification (CPC):
C21B 5/00; C21B 7/24

(86) International application number:
PCT/JP2022/014451

(87) International publication number:
WO 2023/276353 (05.01.2023 Gazette 2023/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.06.2021 JP 2021106362

(71) Applicant: JFE Steel Corporation
Tokyo 100-0011 (JP)

(72) Inventors:
• ICHIKAWA, Kazuhira
  Tokyo 100-0011 (JP)
• YAMAMOTO, Tetsuya
  Tokyo 100-0011 (JP)
• SATO, Takeshi
  Tokyo 100-0011 (JP)
• KAWASHIRI, Yuki
  Tokyo 100-0011 (JP)

(74) Representative: Hoffmann Eitle
Patent- und Rechtsanwälte PartmbB
Arabellastraße 30
81925 München (DE)

(54) **SUPPLY HEAT QUANTITY ESTIMATION METHOD, SUPPLY HEAT QUANTITY ESTIMATION DEVICE, SUPPLY HEAT QUANTITY ESTIMATION PROGRAM, AND BLAST FURNACE OPERATION METHOD**

(57) A supplied heat quantity estimation method according to the present invention is a supplied heat quantity estimation method for estimating a quantity of heat supplied to pig iron in a blast furnace from a quantity of heat supplied into the blast furnace and a production speed of molten iron in the blast furnace, the supplied heat quantity estimation method including an estimation step of estimating a change in carried out sensible heat by in-furnace passing gas and a change in carried in sensible heat supplied by a raw material preheated by the in-furnace passing gas, and estimating the quantity of heat supplied to pig iron in the blast furnace in consideration of the estimated changes of the carried out sensible heat and the carried in sensible heat, in which the estimation step includes a step of estimating changes of the carried out sensible heat and the carried in sensible heat in consideration of a quantity of heat released to an outside of a blast furnace by blow-by, and a step of estimating a quantity of heat held in deadman coke present in the blast furnace, and estimating the quantity of heat supplied to pig iron in a blast furnace in consideration of the estimated quantity of heat held in deadman coke.

FIG.2

**Description**

Field

The present invention relates to a supplied heat quantity estimation method, a supplied heat quantity estimation device, a supplied heat quantity estimation program that are for estimating the quantity of heat supplied to pig iron in a blast furnace, and a blast furnace operation method.

Background

Generally, in order to stably operate a blast furnace, the molten iron temperature needs to be maintained within a predetermined range. Specifically, in a case where the molten iron temperature is low, the viscosity of molten iron and slag generated together with the molten iron increases, and the molten iron or the slag is made difficult to be discharged from an iron outlet. On the other hand, in a case where the molten iron temperature is high, the Si concentration in the molten iron increases and the viscosity of the molten iron increases, and accordingly, there is a high risk that the molten iron clings to a tuyere and melts the tuyere. Therefore, in order to stably operate a blast furnace, the fluctuation of the molten iron temperature needs to be reduced. From such a background, various methods for estimating the quantity of heat supplied into a blast furnace and the molten iron temperature have been proposed. Specifically, Patent Literature 1 discloses a furnace heat control method for a blast furnace, including sequentially estimating a furnace heat index displacement amount at the present time from a furnace heat index reference level corresponding to a target molten iron temperature, a descending speed displacement amount at the present time from a descending speed reference level of a furnace top corresponding to the target molten iron temperature, and a molten iron temperature after a specific time from an influence time of both displacement amounts on the molten iron temperature, and performing a furnace heat control operation such that a molten iron temperature fluctuation is reduced based on the estimation result. Furthermore, Patent Literature 2 discloses a future molten iron temperature prediction method for a blast furnace for predicting a future molten iron temperature based on operation data including an actual value of blast condition data including at least one of a blown air temperature, a blown air humidity, a blown air amount, a pulverized coal blow-by amount, or an oxygen enrichment amount in a blast furnace, an actual value of disturbance factor data including at least a solution loss carbon amount, and an actual value of a molten iron temperature, the method including a data accumulation process of accumulating operation data, a steady state prediction model construction process of constructing a steady state prediction model for predicting a molten iron temperature in a steady state from operation data in a steady state accumulated in the data accumulation process, a non-steady state prediction model construction process of constructing a non-steady state prediction model for predicting a molten iron temperature in a non-steady state from operation data in a non-steady state accumulated in the data accumulation process, the non-steady state prediction model being obtained by reducing a dimension of the steady state prediction model, and a molten iron temperature prediction process of predicting a molten iron temperature from the constructed steady state prediction model and non-steady state prediction model.

Citation List

Patent Literature

Patent Literature 1: JP H2-115311 A
Patent Literature 2: JP 2008-144265 A

Summary

Technical Problem

The timing at which there is a high possibility that a molten iron temperature greatly fluctuates is when the amount of molten iron produced changes due to a change in the operation rate such as the amount of air blown into the blast furnace, and the amount of pig iron changes with respect to the quantity of heat supplied into the blast furnace. In particular, the molten iron temperature greatly fluctuates when a so-called blow-by occurs in which uniform temperature rise and reaction in the blast furnace cannot be performed because gas concentrates and flows in a place where gas easily flows due to generation of a portion having a very high ventilation resistance in the blast furnace. However, since the method described in Patent Literature 1 does not take into consideration a factor such as carried out sensible heat by blown air sensible heat that is considered to change due to an increase or decrease in the operation rate, the quantity of heat supplied to pig iron when the operation rate is greatly changed cannot be accurately estimated. On the other hand, in the method described in Patent Literature 2, it is considered that the estimation accuracy of the molten iron temperature decreases when an operation change that has not been accumulated in the past is made. Furthermore, in a case where the estimation accuracy of the molten iron temperature is low as described above, there are many cases where excessive heat supply occurs, and there is a concern about equipment trouble. Furthermore, excessive use of a reducing material that is a carbon source is not preferable also from the perspective of reducing carbon dioxide emissions.

The present invention has been made in view of the above issues, and an object of the present invention is to provide a supplied heat quantity estimation method, a supplied heat quantity estimation device, and a supplied heat quantity estimation program capable of accurately estimating the quantity of heat supplied to pig iron in a blast furnace when the operation rate greatly changes, particularly even when blow-by occurs. Another object of the present invention is to provide a blast furnace operation method in which a molten iron temperature can be accurately controlled within a predetermined range while the quantity of heat supplied to pig iron in the blast furnace is appropriately maintained when the operation rate greatly changes, particularly even when blow-by occurs. Solution to Problem

A supplied heat quantity estimation method according to the present invention estimates a quantity of heat supplied to pig iron in a blast furnace from a quantity of heat supplied into the blast furnace and a production speed of molten iron in the blast furnace, and includes an estimation step of estimating a change in carried out sensible heat by in-furnace passing gas and a change in carried in sensible heat supplied by a raw material preheated by the in-furnace passing gas, and estimating the quantity of heat supplied to pig iron in the blast furnace in consideration of the estimated changes of the carried out sensible heat and the carried in sensible heat, wherein the estimation step includes a step of estimating the changes of the carried out sensible heat and the carried in sensible heat in consideration of a quantity of heat released to an outside of the blast furnace by blow-by, and a step of estimating a quantity of heat held in deadman coke present in the blast furnace, and estimating the quantity of heat supplied to pig iron in the blast furnace in consideration of the estimated quantity of heat held in deadman coke.

The estimation step may include a step of estimating the carried out sensible heat in consideration of the quantity of heat released to the outside of the blast furnace by blow-by by calculating a multiplied value by multiplying specific heat of furnace top gas by a difference between a furnace top gas temperature and a reference temperature of a furnace top gas temperature and adding a value obtained by dividing a corresponding multiplied value by an iron making speed to the carried out sensible heat.

Moreover, the estimation step may include a step of estimating the carried in sensible heat in consideration of the quantity of heat released to the outside of the blast furnace by blow-by by obtaining a raw material temperature as a function of a difference between a furnace top gas temperature and a reference temperature of a furnace top gas temperature.

A supplied heat quantity estimation device according to the present invention estimates a quantity of heat supplied to pig iron in a blast furnace from a quantity of heat supplied into the blast furnace and a production speed of molten iron in the blast furnace, and includes an estimation unit configured to estimate a change in carried out sensible heat by in-furnace passing gas and a change in carried in sensible heat supplied by a raw material preheated by the in-furnace passing gas, and estimate the quantity of heat supplied to pig iron in the blast furnace in consideration of the estimated changes of the carried out sensible heat and the carried in sensible heat, wherein the estimation unit is configured to estimate changes in the carried out sensible heat and the carried in sensible heat in consideration of a quantity of heat released to an outside of the blast furnace by blow-by, estimate a quantity of heat held in deadman coke present in the blast furnace, and estimate the quantity of heat supplied to pig iron in the blast furnace in consideration of the estimated quantity of heat held in deadman coke.

A supplied heat quantity estimation program according to the present invention causes a computer to execute processing of estimating a quantity of heat supplied to pig iron in a blast furnace from a quantity of heat supplied into the blast furnace and a production speed of molten iron in the blast furnace, and causes the computer to execute an estimation process of estimating a change in carried out sensible heat by in-furnace passing gas and a change in carried in sensible heat supplied by a raw material preheated by the in-furnace passing gas, and estimating the quantity of heat supplied to pig iron in the blast furnace in consideration of the estimated changes of the carried out sensible heat and the carried in sensible heat, wherein the estimation process includes estimating changes in the carried out sensible heat and the carried in sensible heat in consideration of a quantity of heat released to an outside of the blast furnace by blow-by, estimating a quantity of heat held in deadman coke present in the blast furnace, and estimating the quantity of heat supplied to pig iron in the blast furnace in consideration of the estimated quantity of heat held in deadman coke.

A blast furnace operation method according to the present invention includes a step of controlling a quantity of heat supplied into the blast furnace based on the quantity of heat supplied to pig iron in the blast furnace estimated by the supplied heat quantity estimation method according to the present invention.

Advantageous Effects of Invention

According to a supplied heat quantity estimation method, a supplied heat quantity estimation device, and a supplied heat quantity estimation program according to the present invention, the quantity of heat supplied to pig iron in a blast furnace can be accurately estimated when the operation rate greatly changes, particularly even when blow-by occurs. According to a blast furnace operation method according to the present invention, a molten iron temperature can be accurately controlled within a predetermined range while the quantity of heat supplied to pig iron in the blast furnace is appropriately maintained when the operation rate greatly changes, particularly even when blow-by occurs.

Brief Description of Drawings

FIG. 1 is a block diagram illustrating a configuration of a furnace heat control device according to one embodiment of the present invention.
FIG. 2 is a flowchart illustrating a flow of furnace heat control processing according to the one embodiment of the present invention.
FIG. 3 is a diagram illustrating an example of a relationship between a conventional index and a furnace heat index of the present invention, and a temperature difference from a reference molten iron temperature.

Description of Embodiments

Hereinafter, a configuration and operation of a furnace heat control device according to one embodiment of the present invention to which a supplied heat quantity estimation method and a supplied heat quantity estimation device according to the present invention are applied will be described with reference to the drawings.

[Configuration]

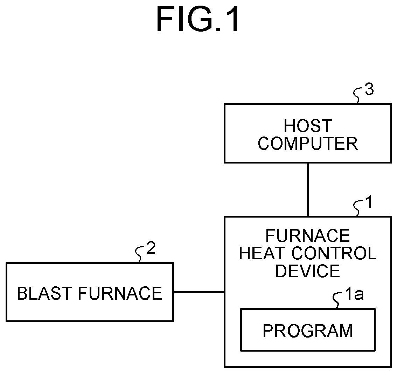

First, a configuration of a furnace heat control device according to one embodiment of the present invention will be described with reference to FIG. 1. FIG. 1 is a block diagram illustrating a configuration of the furnace heat control device according to the one embodiment of the present invention. As illustrated in FIG. 1, a furnace heat control device 1 according to the one embodiment of the present invention includes an information processing device such as a computer, and controls the temperature of molten iron produced in a blast furnace 2 within a predetermined range by controlling the quantity of heat supplied to a melt in the blast furnace 2 from a tuyere disposed in a lower part of the blast furnace 2. The furnace heat control device 1 functions as a supplied heat quantity estimation device according to the present invention.

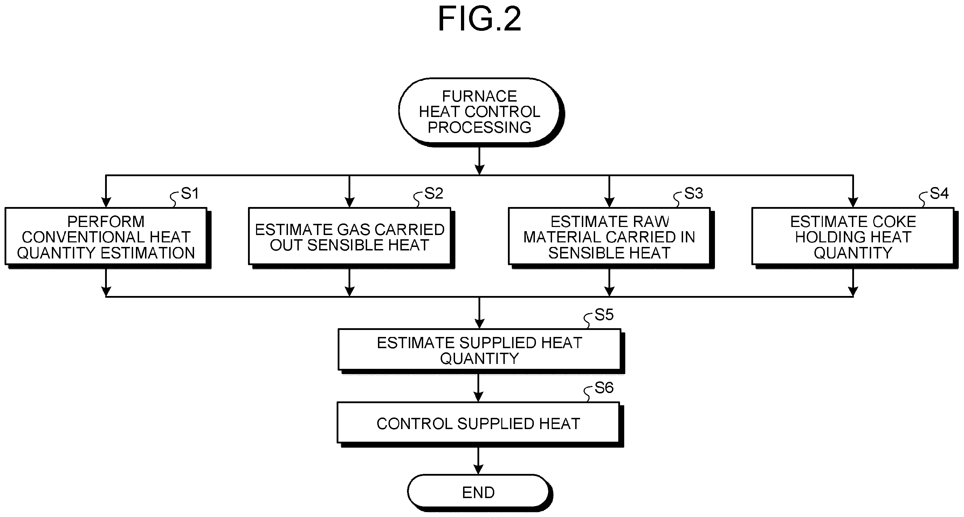

The furnace heat control device 1 having such a configuration, by executing furnace heat control processing described below, accurately estimates the quantity of heat supplied to pig iron in the blast furnace 2 when the operation rate of the blast furnace 2 greatly changes, particularly even when blow-by occurs, and accurately controls the molten iron temperature within a predetermined range while appropriately maintaining the quantity of heat supplied to pig iron in the blast furnace 2 using the estimation result. Hereinafter, a flow of the furnace heat control processing according to the one embodiment of the present invention will be described with reference to FIG. 2.

Note that the operation of the furnace heat control device 1 described below is implemented by an arithmetic processing device such as a CPU in the information processing device included in the furnace heat control device 1 loading a program 1a from a storage unit such as a ROM to a temporary storage unit such as a RAM and executing the loaded program 1a. The program 1a may be provided by being recorded in a computer-readable recording medium such as a CD-ROM, a flexible disk, a CD-R, or a DVD as a file in an installable format or an executable format. The program 1a may be stored in a computer connected to a network such as a telecommunication line such as the Internet, a telephone communication network such as a mobile phone, or a wireless communication network such as WiFi (registered trademark), and provided by being downloaded via the network.

[Furnace heat control processing]

FIG. 2 is a flowchart illustrating a flow of furnace heat control processing according to the one embodiment of the present invention. The flowchart illustrated in FIG. 2 starts at a timing when an execution command of the furnace heat control processing is input to the furnace heat control device 1, and in the furnace heat control processing, processing of steps S2, S3, and S4 is performed in addition to processing of step S1 of estimating the quantity of heat supplied into the blast furnace by a reaction heat balance (heat of reaction generation, reaction endotherm) in the blast furnace, blown air sensible heat, heat loss (quantity of heat removed from the furnace body or the like), and the like, which has been conventionally performed, the processing is integrated, and then processing of step S5 of estimating the supplied heat quantity is proceeded to. The processing of step S1 of estimating the quantity of heat supplied into the blast furnace by the reaction heat balance (heat of reaction generation, reaction endotherm) in the blast furnace, blown air sensible heat, heat loss (quantity of heat removed from the furnace body or the like), and the like is conventionally performed, and the supplied heat quantity at this time is set as $Q_0$. A preferred example of the processing in step S1 will be described below.

In the processing of step S2, the furnace heat control device 1 estimates sensible heat (gas carried out sensible heat) $Q_7$ carried out to the upper part of the blast furnace 2 by the gas (in-furnace passing gas) passing from the lower part to the upper part of the blast furnace 2. Specifically, the gas carried out sensible heat $Q_7$ (MJ/t-p: quantity of heat per ton of pig iron. Hereinafter, t-p represents pig iron tonnage) can be calculated by (1) multiplying a temperature difference between an estimated temperature (theoretical combustion temperature) of gas combusted in front of the tuyere and a reference temperature representing the temperature of the upper end of the lower part of the blast furnace by the specific heat of the gas to calculate a first multiplied value, (2) multiplying the specific heat of the furnace top gas by a difference between the furnace top gas temperature (furnace top exhaust gas temperature) and the reference temperature of the furnace top gas temperature to calculate a second multiplied value, and (3) dividing a value obtained by adding the first multiplied value and the second multiplied value by the iron making speed, and is expressed by the following Formula (1). The gas carried out sensible heat $Q_7$ can be accurately evaluated in consideration of the quantity of heat released to the outside of the furnace without heat exchange with the raw material due to blow-by by dividing the value obtained by adding the first multiplied value and the second multiplied value by the iron making speed. As a result, the processing of step S2 is completed, and the processing proceeds to the processing of step S5.

$$Q_7 = \left[ \alpha_{bosh} \cdot \left\{ \sum \left( C_{bosh,i} \cdot V_{bosh,i} \right) \right\} \cdot \left( TFT - T_{base} \right) + \right.$$
$$\left. \alpha_{top} \cdot \left\{ \sum \left( C_{top,i} \cdot V_{top,i} \right) \right\} \cdot \left( T_{top} - T_{top,base} \right) \right] \cdot \frac{1}{Pig} \qquad \cdots (1)$$

Here, $C_{bosh,i}$ represents the specific heat (MJ/m$^3$/°C) of the gas species i (nitrogen, carbon monoxide, hydrogen) in the in-furnace passing gas (Bosch gas), $C_{top,i}$ represents the specific heat (MJ/m$^3$/°C) of the gas species i (nitrogen, carbon monoxide, carbon dioxide, hydrogen, water vapor) in the furnace top gas, $V_{bosh,i}$ represents the flow rate (m$^3$(s.t.p)/min) (m$^3$(s.t.p): volume at 0°C, 1 atm (atmospheric pressure)) of the gas species i in the in-furnace passing gas, $V_{top,i}$ represents the flow rate (m$^3$(s.t.p)/min) of the gas species i in the furnace top gas, TFT represents the theoretical combustion temperature (°C), $T_{base}$ represents the reference temperature (°C) (800 to 1200°C, preferably 900 to 1000°C), $T_{top}$ represents the furnace top gas temperature (°C), $T_{top,base}$ represents the reference temperature (°C) (80 to 300°C, preferably 100 to 200°C) of the furnace top gas temperature, Pig represents the iron making speed (t-p/min), and $\alpha_{bosh}$ and $\alpha_{top}$ represent influence coefficients changed according to the blast furnace 2. These values can be acquired from a host computer 3 such as a process computer connected to the furnace heat control device 1 via a telecommunication line, for example.

In the processing of step S3, the furnace heat control device 1 estimates sensible heat (raw material carried in sensible heat) $Q_8$ carried in to the lower part of the blast furnace 2 by the raw material supplied from the upper part to the lower part of the blast furnace 2. Specifically, the raw material carried in sensible heat $Q_8$ (MJ/t-p) can be calculated by multiplying the temperature difference between the raw material temperature $T_1$ (= 1450 to 1500°C) at the lower end of a fusion zone and the reference temperature $T_{base}$ by the specific heat of the raw material as indicated by the following Formula (2). Note that the raw material temperature $T_1$ is a function of a difference between the furnace top gas temperature $T_{top}$ and the reference temperature $T_{top,base}$ of the furnace top gas temperature as in the following Formula (3). According to the setting of the raw material temperature $T_1$, a decrease of the raw material temperature $T_1$ due to the quantity of heat released to the outside of the furnace by blow-by can be considered, and thus, a decrease in the quantity of heat carried into the lower part of the furnace by the raw material due to a heating failure of the raw material due to the blow-by can be accurately evaluated. As a result, the processing of step S3 is completed, and the processing proceeds to the processing of step S5.

$$Q_8 = \beta \cdot \left\{ \sum \left( C_j \cdot R_j \right) \right\} \cdot \left( T_1 - T_{base} \right) \qquad \cdots (2)$$

Here, $C_j$ represents specific heat (MJ/kg/°C) of a raw material j (coke, pig iron, slag), $R_j$ represents a basic unit (kg/t-p) of the raw material j, $T_1$ represents a raw material temperature (°C) at the lower end of the fusion zone, $T_{base}$

represents the reference temperature (°C), and $\beta$ represents an influence coefficient changed by the blast furnace 2. These values can be acquired from, for example, the host computer 3.

$$T_1 = f\left(T_{top} - T_{top,base}\right) \qquad \cdots (3)$$

In the processing of step S4, the furnace heat control device 1 estimates the quantity of heat (coke holding heat quantity) $Q_9$ held in the deadman coke present in the lower part of the blast furnace 2. Specifically, the coke holding heat quantity $Q_9$ (MJ/t-p) can be obtained by multiplying a value obtained by subtracting a combustion consumption amount and a carbon amount discharged as dust from a coke basic unit per 1 t of molten iron by a difference between a reference temperature and a theoretical combustion temperature and specific heat of coke $C_{coke}$, and is expressed by the following Formula (4). As a result, the processing of step S4 is completed, and the processing proceeds to the processing of step S5.

$$Q_9 = \gamma \cdot C_{Coke} \cdot \left(\delta \cdot TFT - T_{base}\right)$$
$$\cdot \left\{ CR - \frac{(CR_{burn} - PCR \cdot C_{inPC}) + C_{sol} + Dust \cdot C_{indust}}{0.88} \right\} \qquad \cdots (4)$$

Here, $C_{coke}$ represents the specific heat of coke (MJ/kg/°C), TFT represents the theoretical combustion temperature (°C), $T_{base}$ represents the reference temperature (°C), CR represents a coke ratio (kg/t-p), $CR_{burn}$ represents a pre-tuyere combustion carbon ratio (amount of oxygen consumed in front of the tuyere by blown air oxygen and humidity control) (kg/t-p), PCR represents a pulverized coal ratio (kg/t-p), $C_{inPC}$ represents a carbon ratio in pulverized coal, $C_{sol}$ represents a solution loss carbon ratio (kg/t-p), Dust represents a dust ratio (kg/t-p), $C_{indust}$ represents a carbon ratio in dust, and $\gamma$ and $\delta$ represent influence coefficients changed by the blast furnace 2. These values can be acquired from, for example, the host computer 3.

In the processing of step S5, the furnace heat control device 1 estimates the quantity of heat supplied to pig iron in the blast furnace 2 using the supplied heat quantity $Q_0$ estimated in the processing of step S1, the gas carried out sensible heat $Q_7$, the raw material carried in sensible heat $Q_8$, and the coke holding heat quantity $Q_9$ that are estimated in the processing of steps S2 to S4. Specifically, the furnace heat control device 1 calculates a furnace heat index $T_Q$ (MJ/t-p) corresponding to the quantity of heat supplied to pig iron in the blast furnace 2 by substituting the supplied heat quantity $Q_0$ estimated in step S1, the gas carried out sensible heat $Q_7$, the raw material carried in sensible heat $Q_8$, and the coke holding heat quantity $Q_9$ that are estimated in the processing of steps S2 to S4 into the following Formula (5). As a result, the processing of step S5 is completed, and the processing proceeds to the processing of step S6.

$$T_Q = Q_0 - Q_7 + Q_8 - Q_9 \qquad \cdots (5)$$

Here, $Q_0$ represents the quantity of heat supplied into the blast furnace by the reaction heat balance (heat of reaction generation, reaction endotherm) in the blast furnace, blown air sensible heat, heat loss (quantity of heat removed from the furnace body or the like), and the like, and an estimation method adopted in many cases in the conventional supplied heat quantity estimation can be applied, but as a preferable form, Formula (6) can be cited.

$$Q_0 = Q_1 + Q_2 - Q_3 - Q_4 - Q_5 - Q_6 \qquad \cdots (6)$$

Here, $Q_1$ represents combustion heat (MJ/t-p) of post-tuyere coke. The combustion heat $Q_1$ can be calculated by dividing the calorific amount due to combustion of coke calculated from the amount of oxygen blown from the tuyere to the blast furnace per unit time by the amount of molten iron produced per unit time.

Furthermore, $Q_2$ represents blown air sensible heat (MJ/t-p) input to the blast furnace by blown air from the tuyere. The blown air sensible heat $Q_2$ can be calculated by obtaining the quantity of heat input to the blast furnace by blown air per unit time from the blown air amount per unit time and the measured value of the blown air temperature, and dividing this value by the amount of molten iron produced per unit time.

Furthermore, $Q_3$ represents solution loss reaction heat (MJ/t-p). For this value, for example, as described in Patent Literature 1, the reaction heat can be calculated by obtaining the solution loss carbon amount from the furnace top gas component value. The solution loss reaction heat $Q_3$ can be calculated by dividing the solution loss reaction heat by the amount of molten iron produced per unit time.

Furthermore, $Q_4$ represents heat of decomposition (MJ/t-p) of moisture mainly contained in blown air. The heat of decomposition $Q_4$ can be calculated by dividing heat of decomposition obtained from the measured value of the blown air moisture by the amount of molten iron produced per unit time.

Furthermore, $Q_5$ represents heat loss from the furnace body (for example, quantity of heat removed by cooling water) (MJ/t-p). In a case where the quantity of heat removed by cooling water is calculated as the heat loss, the quantity of heat removed $Q_5$ can be calculated by calculating the quantity of heat removed by the cooling water per unit time from the amount of the cooling water and the temperature difference between the inlet side and the outlet side of the cooling water of the furnace body of the blast furnace, and dividing the calculated quantity of heat removed by the amount of molten iron produced per unit time.

Furthermore, $Q_6$ represents the heat of decomposition (MJ/t-p) of the reducing material blown from the tuyere per unit time. The heat of decomposition $Q_6$ can be calculated by dividing the heat of decomposition by the amount of molten iron produced per unit time.

In the processing of step S6, the furnace heat control device 1 controls the quantity of heat supplied from the tuyere into the blast furnace 2 based on the quantity of heat supplied to pig iron in the blast furnace 2 estimated in the processing of step S5, thereby appropriately maintaining the quantity of heat supplied to the pig iron in the blast furnace 2 and controlling the molten iron temperature within a predetermined range. As a result, the processing of step S6 is completed, and a series of the furnace heat control processing ends.

As is apparent from the above description, in the furnace heat control processing according to the one embodiment of the present invention, the furnace heat control device 1 estimates a change in carried out sensible heat to the upper part of the blast furnace by in-furnace passing gas and a change in carried in sensible heat supplied to the lower part of the blast furnace by a raw material preheated by the in-furnace passing gas, and estimates the quantity of heat supplied to pig iron in the blast furnace in consideration of the estimated changes of the carried out sensible heat and the carried in sensible heat. Furthermore, the furnace heat control device 1 estimates changes in the carried out sensible heat and the carried in sensible heat in consideration of the quantity of heat released to the outside of the blast furnace by blow-by, estimates the quantity of heat held in deadman coke present in the blast furnace, and estimates the quantity of heat supplied to the pig iron in the blast furnace in consideration of the estimated quantity of heat held in the deadman coke. As a result, the quantity of heat supplied to the pig iron in the blast furnace can be accurately estimated when the operation rate such as the amount of air blown into the blast furnace greatly changes, particularly even when blow-by occurs. As a result, the molten iron temperature can be accurately controlled within a predetermined range while the quantity of heat supplied to the pig iron in the blast furnace is appropriately maintained when the operation rate greatly changes, particularly even when blow-by occurs.

[Example]

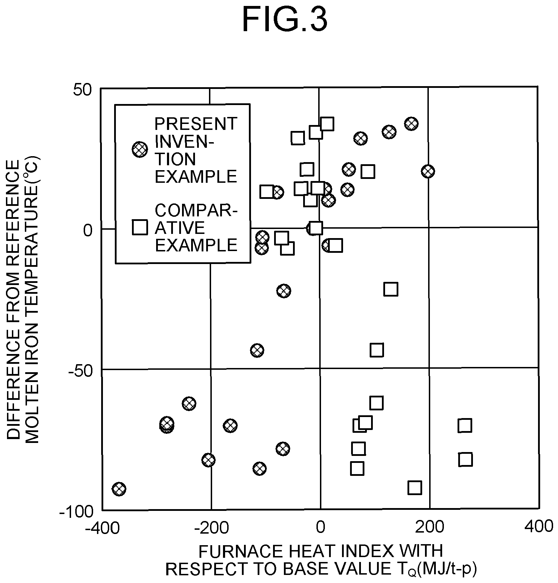

FIG. 3 indicates results of comparing a conventional furnace heat index (estimated by $Q_1$ to $Q_6$) and a furnace heat index (estimated by $Q_1$ to $Q_9$) of the present invention at a timing when blow-by occurs with an actual molten iron temperature (difference from the reference molten iron temperature). As indicated in FIG. 3, in the furnace heat index of the present invention (present invention example), a certain correlation between the furnace heat index and the molten iron temperature (difference from the reference molten iron temperature) can be confirmed as compared with the conventional furnace heat index (comparative example). Furthermore, Table 1 indicates a summary of the standard deviation of the difference between the estimated molten iron temperature and the actual molten iron temperature when each factor is taken into consideration. It can be seen that the estimation accuracy is improved in the case of considering the quantity of heat released to the outside of the furnace by the blow-by (present invention example. Estimate furnace heat index using $Q_1$ to $Q_9$) as compared with the case of estimating the furnace heat index using only $Q_1$ to $Q_6$ as the conventional furnace heat index (comparative example). As a result, it was confirmed that the molten iron temperature can be accurately controlled within a predetermined range while the quantity of heat supplied to the pig iron in the blast furnace is appropriately maintained when the operation rate greatly changes, particularly even when blow-by occurs, using the furnace heat index of the present invention.

Table 1

| | Comparative example | Present invention example |
|---|---|---|
| Considered indexes | $Q_1$ to $Q_6$ | $Q_1$ to $Q_9$ |
| Standard deviation of actual molten iron temperature with respect to estimated molten iron temperature | 89.3 | 17.3 |

Although the embodiment to which the invention made by the present inventors is applied has been described above, the present invention is not limited by the description and drawings constituting a part of the disclosure of the present invention according to the present embodiment. That is, other embodiments, examples, operation techniques, and the like made by those skilled in the art based on the present embodiment are all included in the scope of the present invention.

Industrial Applicability

According to the present invention, a supplied heat quantity estimation method, a supplied heat quantity estimation device, and a supplied heat quantity estimation program capable of accurately estimating the quantity of heat supplied to pig iron in a blast furnace when the operation rate greatly changes, particularly even when blow-by occurs can be provided. According to the present invention, a blast furnace operation method in which a molten iron temperature can be accurately controlled within a predetermined range while the quantity of heat supplied to pig iron in the blast furnace is appropriately maintained when the operation rate greatly changes, particularly even when blow-by occurs can be provided. Reference Signs List

1    FURNACE HEAT CONTROL DEVICE
1a   PROGRAM
2    BLAST FURNACE
3    HOST COMPUTER

**Claims**

1.  A supplied heat quantity estimation method for estimating a quantity of heat supplied to pig iron in a blast furnace from a quantity of heat supplied into the blast furnace and a production speed of molten iron in the blast furnace, the supplied heat quantity estimation method comprising

    an estimation step of estimating a change in carried out sensible heat by in-furnace passing gas and a change in carried in sensible heat supplied by a raw material preheated by the in-furnace passing gas, and estimating the quantity of heat supplied to pig iron in the blast furnace in consideration of the estimated changes of the carried out sensible heat and the carried in sensible heat,
    wherein the estimation step includes

       a step of estimating the changes of the carried out sensible heat and the carried in sensible heat in consideration of a quantity of heat released to an outside of the blast furnace by blow-by, and
       a step of estimating a quantity of heat held in deadman coke present in the blast furnace, and estimating the quantity of heat supplied to pig iron in the blast furnace in consideration of the estimated quantity of heat held in deadman coke.

2.  The supplied heat quantity estimation method according to claim 1, wherein the estimation step includes a step of estimating the carried out sensible heat in consideration of the quantity of heat released to the outside of the blast furnace by blow-by by calculating a multiplied value by multiplying specific heat of furnace top gas by a difference between a furnace top gas temperature and a reference temperature of a furnace top gas temperature and adding a value obtained by dividing a corresponding multiplied value by an iron making speed to the carried out sensible heat.

3.  The supplied heat quantity estimation method according to claim 1 or 2, wherein the estimation step includes a step of estimating the carried in sensible heat in consideration of the quantity of heat released to the outside of the blast furnace by blow-by by obtaining a raw material temperature as a function of a difference between a furnace top gas temperature and a reference temperature of a furnace top gas temperature.

4.  A supplied heat quantity estimation device for estimating a quantity of heat supplied to pig iron in a blast furnace from a quantity of heat supplied into the blast furnace and a production speed of molten iron in the blast furnace, the supplied heat quantity estimation device comprising

    an estimation unit configured to

estimate a change in carried out sensible heat by in-furnace passing gas and a change in carried in sensible heat supplied by a raw material preheated by the in-furnace passing gas, and

estimate the quantity of heat supplied to pig iron in the blast furnace in consideration of the estimated changes of the carried out sensible heat and the carried in sensible heat,

wherein the estimation unit is configured to

estimate changes in the carried out sensible heat and the carried in sensible heat in consideration of a quantity of heat released to an outside of the blast furnace by blow-by,

estimate a quantity of heat held in deadman coke present in the blast furnace, and

estimate the quantity of heat supplied to pig iron in the blast furnace in consideration of the estimated quantity of heat held in deadman coke.

5. A supplied heat quantity estimation program for causing a computer to execute processing of estimating a quantity of heat supplied to pig iron in a blast furnace from a quantity of heat supplied into the blast furnace and a production speed of molten iron in the blast furnace, the supplied heat quantity estimation program causing the computer to execute

an estimation process of estimating a change in carried out sensible heat by in-furnace passing gas and a change in carried in sensible heat supplied by a raw material preheated by the in-furnace passing gas, and estimating the quantity of heat supplied to pig iron in the blast furnace in consideration of the estimated changes of the carried out sensible heat and the carried in sensible heat, wherein the estimation process includes

estimating changes in the carried out sensible heat and the carried in sensible heat in consideration of a quantity of heat released to an outside of the blast furnace by blow-by, estimating a quantity of heat held in deadman coke present in the blast furnace, and estimating the quantity of heat supplied to pig iron in the blast furnace in consideration of the estimated quantity of heat held in deadman coke.

6. A blast furnace operation method comprising a step of controlling a quantity of heat supplied into the blast furnace based on the quantity of heat supplied to pig iron in the blast furnace estimated by the supplied heat quantity estimation method according to any one of claims 1 to 3.

# FIG.1

# FIG.2

FURNACE
HEAT CONTROL
PROCESSING

PERFORM CONVENTIONAL HEAT QUANTITY ESTIMATION — S1

ESTIMATE GAS CARRIED OUT SENSIBLE HEAT — S2

ESTIMATE RAW MATERIAL CARRIED IN SENSIBLE HEAT — S3

ESTIMATE COKE HOLDING HEAT QUANTITY — S4

ESTIMATE SUPPLIED HEAT QUANTITY — S5

CONTROL SUPPLIED HEAT — S6

END

EP 4 332 243 A1

# FIG.3

## INTERNATIONAL SEARCH REPORT

| International application No. |
|---|
| **PCT/JP2022/014451** |

**A. CLASSIFICATION OF SUBJECT MATTER**

*C21B 5/00*(2006.01)i; *C21B 7/24*(2006.01)i
FI:   C21B5/00 310; C21B7/24

According to International Patent Classification (IPC) or to both national classification and IPC

**B. FIELDS SEARCHED**

Minimum documentation searched (classification system followed by classification symbols)

C21B5/00; C21B7/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-145520 A (JFE STEEL CORP) 20 September 2018 (2018-09-20)<br>    entire text | 1-6 |
| A | 羽田野道春　他, 溶銑温度制御のための高炉数式モデル, 鉄と鋼, 01 March 1981, 67th (1981), no. 3, pp. 518-527<br>    entire text, (HATANO, Michiharu et al. A Mathematical Model of Blast Furnace for Control of Hot Metal Temperature. Tetsu-to-Hagane.) | 1-6 |
| A | JP 2001-348604 A (KOBE STEEL LTD) 18 December 2001 (2001-12-18)<br>    entire text | 1-6 |

☐ Further documents are listed in the continuation of Box C.          ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 May 2022** | **24 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/014451**

| Patent document cited in search report | | | Publication date (day/month/year) | Patent family member(s) | Publication date (day/month/year) |
|---|---|---|---|---|---|
| JP | 2018-145520 | A | 20 September 2018 | (Family: none) | |
| JP | 2001-348604 | A | 18 December 2001 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H2115311 A

- JP 2008144265 A